# EUROPÄISCHE PATENTSCHRIFT

(11) **EP 1 024 581 B1**
(45) Veröffentlichungstag und Bekanntmachung des Hinweises auf die Patenterteilung: **07.11.2007**
(21) Anmeldenummer: 00100959.6
(22) Anmeldetag: 19.01.2000
(51) Int. Cl.: H02K 3/52, H02K 5/128, H02K 15/00, H02K 3/50

(54) **Kontaktierung von Motorwicklungen**
Motor winding connections
Connexions des enroulements d'un moteur

(30) Priorität: 27.01.1999 DE 19903069
(43) Veröffentlichungstag der Anmeldung: 02.08.2000
(73) Patentinhaber: WILO AG, 44263 Dortmund (DE)
(72) Erfinder: Materne, Thomas, 59348 Lüdinghausen (DE); Lütkenhaus, Norbert, 59399 Olfen (DE)
(74) Vertreter: COHAUSZ DAWIDOWICZ HANNIG & SOZIEN

(56) Entgegenhaltungen:
- DE-A- 3 505 092
- DE-A- 4 411 960
- DE-U- 29 800 928

## Beschreibung

Die Erfindung betrifft ein Verfahren zur automatischen Kontaktierung der Wicklungen des Stators eines Elektromotors, der insbesondere zum Antrieb einer Kreiselpumpe oder eines Lüfters eingesetzt wird, wobei der Stator bei der Montage in axialer Richtung über den Rotor schiebbar ist und wobei die Enden der Wicklungen zu einem Kontaktträger geführt werden, der auf der in Aufschubrichtung rückwärtigen Stirnseite der Wicklungen angeordnet wird.

Elektromotoren zum Antrieb von Pumpen und Lüftern sind in vielfältigen Bauformen bekannt. Dabei ist es beispielsweise aus der Serienfertigung kleiner Kreiselpumpen bekannt, die Aggregate so zu konzipieren, daß ihre Einzelteile wie Rotor, Stator und Gehäuse in axialer Richtung zusammensetzbar sind, um eine Automatisierung des Fertigungsprozesses zu begünstigen. Ein Problem bei dieser sogenannten "in-line" Fertigung ist jedoch der Anschluß der Motorwicklungen an die Außenkontakte. Bei diesem Fertigungsschritt ist ein manuelles Eingreifen bislang unvermeidlich.

Handarbeit ist bisher insbesondere immer dann notwendig, wenn es darum geht, die mitunter langen Enden der Wicklungen zu ergreifen und über eine gewisse Strecke zu einem Anschlußpunkt zu führen. Außerdem werden beispielsweise die Enden der Wicklungen in Handarbeit mit Schaltlitzen versehen und zu einem Klemmbrett geführt. Die Verschaltung zu einer Stern- oder Dreieckschaltung erfolgt dann über Schaltbrücken am Klemmbrett.

Es sind andere Motoren bekannt, bei denen die Wicklungsenden von Hand geordnet und in eine am Stator angeordnete Steckerleiste geführt werden. Auf die Steckerleiste ist ein Klemmenkasten aufsteckbar, in dem die kreuzweise Verschaltung geschieht. Bei der Verschaltung in solchen Klemmenkästen ist es bekannt, zur serientauglichen Kontaktierung Leiterplatten zu benutzen, auf denen die Kreuzung der Leiterbahnen realisiert ist. Der Einsatz derartiger Leiterplatten ist problematisch, da die darauf befindlichen Leiterbahnen nur unter großem Aufwand für hohe Ströme ausgelegt werden können.

Die DE-A-4 411 960 und DE-A-3 505 092 offenbaren derartige Elektromotoren. Aufgabe der Erfindung ist es daher, ein Verfahren zur Kontaktierung der Statorwicklungen zu schaffen, das sich vollständig automatisieren läßt und das für die Kontaktierung von Wicklungen mit Drahtquerschnitten zwischen etwa 0.1 mm² und bis 2 mm² geeignet ist. Gleichzeitig ist es Aufgabe der Erfindung eine Spaltrohrpumpe zu schaffen, die sich mit der Kontaktierung ihres Stators automatisiert "in-line" fertigen läßt.

Diese Aufgaben werden durch ein Verfahren nach Anspruch 1 und durch einen Elektromotor nach Anspruch 9 gelöst.

Besonders vorteilhaft an dem erfindungsgemäßen Verfahren ist, daß sich die Kontaktierung mittels der mit dem Greifer erfaßten Enden vollständig automatisieren läßt, da die Enden automatisch gefunden und geführt werden können. Somit kann die Fertigung rationalisiert werden, was zu einer spürbaren Minderung der Herstellungskosten beiträgt. Insbesondere wird durch das Verfahren das bisher manuell durchgeführte Suchen und Ergreifen der Drahtenden automatisiert. Da der Greifer mit seinem Kamm oder seiner Gabel dicht an der Wicklung ansetzt, wo die Lage der Drahtenden relativ gut definiert ist, können die Enden sicher erfaßt werden. Dieser Vorteil kommt insbesondere bei langen Drahtenden zum tragen.

Die Fertigung der Statoren und damit auch der elektrischen Maschinen kann vorteilhafterweise ohne manuelles Eingreifen zusammen mit dem Anschluß der Motorwicklungen an die Außenkontakte bzw. an das Elektronikmodul maschinell "in-line" geschehen. Das Verfahren eignet sich besonders für steife Drähte mit vergleichsweise großem Drahtquerschnitt, so daß insbesondere für hohe Ströme ausgelegte Motoren auf einfache und billige Weise vollständig in Serienfertigung automatisch gebaut werden können. Für das erfindungsgemäße Verfahren ist es unerheblich, ob zuerst die Enden erfaßt werden oder zuerst der Kontaktträger oder die Kammerblockkappe aufgesetzt wird.

Besonders vorteilhaft läßt sich das Verfahren bei Statoren einsetzen, deren Polschenkel einzeln bewickelt werden und die dann zu einem Statorpaket zusammengefaßt werden. Dabei ist es vorteilhaft, wenn die Enden des relativ steifen Drahtes von einer Stirnseite des Stators mit einer leichten Neigung nach Außen abstehen, so daß eine aus Kunststoff gefertigte scheibenförmige Kammerblockkappe zwischen den trichterförmig abstehenden Drahtenden auf die Stirnseite aufsetzbar ist, ohne daß dabei die Drahtenden eingeklemmt werden. Der entscheidende Vorgang beinhaltet ein Ergreifen des Drahtes am Austritt aus der Wicklung und ein Führen des erfaßten Drahtes zur Stelle der Kontaktierung.

Die stark vereinfachte Fertigung und der Einsatz der Schneid-Klemm-Kontakte macht den Verzicht auf einige Bauteile möglich und trägt damit zu einer Reduzierung der Herstellungskosten bei. Durch weniger Bauteile, insbesondere durch Einsparung der bislang benötigten Verbindungselemente, ist zudem eine verbesserte Betriebssicherheit des Motors gegeben. Dabei macht der Einsatz der Schneid-Klemm-Kontakte ein Schweißen oder Löten von Verbindungen überflüssig und gewährleistet damit eine besonders sichere Kontaktierung. Die automatische Verschaltung kann bei beliebigen elektrischen Maschinen, also sowohl bei der Herstellung von Motoren als auch bei der Fertigung von Generatoren, erfolgen. Besonders vorteilhaft läßt sich das Verfahren für die Kontaktierung der zwölf Enden einer Drehstrommaschine einsetzen, deren sechs Wicklungen zu drei Spulenpaaren zusammengeschlossen sind.

Die aus Blech gestanzten Schneid-Klemmkontakte sind an sich bekannt und können je nach der zu bewerkstelligenden Kontaktierung entsprechend gestaltet werden. Die Schneid-Klemm-Kontakte sind federnd und weisen ein geschlitztes Anschlußstück auf. Beim Kontaktieren wird die Drahtisolierung von der Schneidklemme durchschnitten. Dabei ist es nicht erforderlich, den Wicklungsdraht abzuisolieren. Die Schneid-Klemm-Kontakte können entsprechend der Anforderung für Drahtquerschnitte von etwa 0.1 mm² bis 2 mm² eingesetzt werden.

In einer vorteilhaften Ausführungsform kann der Kontaktträger so ausgelegt sein, daß sowohl eine Verschaltung der Spulen in Dreieckschaltung als auch in Sternschaltung möglich ist. Dabei kann die Anordnung der Drähte auf der Stirnfläche des Kontaktträgers dem Bedarf entsprechend vorgenommen werden. Die Überkreuzung der Drahtenden stellt anders als bei der Verwendung von leitenden Kontaktelementen wegen der Isolation zum einen kein Problem dar und zum anderen liegen die sich kreuzenden Drähte in unterschiedlichen Führungsnuten, die an ihren Kreuzungspunkten ein unterschiedliches Höhenniveau aufweisen. Die Abisolierung der Wicklungsdrähte erfolgt beim Kontaktieren der Schneid-Klemm-Kontakte an den Stellen, wo die Schneiden der Kontakte zugreifen.

In einer besonders vorteilhaften Ausführungsform weist der Stator sechs gewickelte Spulen auf, die mit Wickelmaschinen lagenweise auf rahmenförmige insbesondere aus Kunststoff gefertigte Halterungen aufgewickelt sind und ein Magnetfeld in radialer Richtung erzeugen. Je zwei gegenüberliegende Spulen sind mittels eines Schneid-Klemm-Kontaktes zu einem Spulenpaar zusammengeschaltet. Vorteilhafterweise sind die Spulen aus steifem aber biegsamen Draht mit vergleichsweise großem Querschnitt so gewickelt, daß zwei relativ lange Enden wie Finger an einer Seite der Spulen steif herausragen. Solche Drahtenden können leicht maschinell ergriffen, durch Ausnehmungen in der Kammerblockkappe herausgeführt, auf die entsprechende Länge geschnitten und ausgerichtet werden.

Vorteilhafterweise ist die Fertigungseinrichtung mit einem Arm ausgerüstet, an dessen Ende ein Kamm gehalten ist. Dieser Kamm wird an die jeweilige Spule herangeführt und ergreift die Enden nahe bei Spule. Der Arm führt dann das Ende über die Stirnfläche der Kammerblockkappe. Die so ausgericheten Enden werden mit Schneid-Klemm-Kontakten zusammengeschlossen. Die Schneid-Klemm-Kontakte sind dabei entweder auf der Kammerblockkappe angebracht und die Drahtenden werden in diese eingelegt oder die Enden werden fixiert, bevor ein Schneid-Klemm-Kontakt von Außen auf die Enden aufgesetzt wird. Die Fertigungseinrichtung ermöglicht außerdem das Entfernen der abgetrennten Drahtstücke, so daß ein möglicher Kurzschluß verhindert wird.

Um eine Kontaktierung zur Motorelektronik zu gewährleisten, weisen einige Schneid-Klemm-Kontakte Kontaktstecker auf, die über entsprechende Gegenstücken mit der Steuerelektronik verbunden werden können. Für eine einfache Ferigung ist es zudem besonders vorteilhaft, wenn in der Kammerblockkappe Führungsnuten vorgesehen sind, in welche die Enden der Wicklungen in einlegbar sind. Diese Führungsnuten, deren Tiefe größer als der Durchmesser des Drahtes ist, bieten den Drahtenden Halt, Sicherheit gegen Beschädigung und Sicherheit gegen Kurzschluß mit anderen Drähten an den Kreuzungspunkten.

In einer besonderen Ausführungsform sind an der Kammerblockkappe Stifte vorgesehen, die in entsprechende Ausnehmungen im Stator und in der Elektronik eingreifen und einerseits eine Zentrierung der drei Bauteile zu gewährleisten und andererseits ein Verdrehen gegeneinander zu verhindern. Durch die Stifte kann auf eine Preßpassung verzichtet werden, was zu einer weiteren Vereinfachung der Fertigung beiträgt. Besonders vorteilhaft ist es diese Art der Fixierung bei einem Spaltrohrmotors vorzusehen, da somit gleichfalls der Spalttopf in einer Ausnehmung der Kammerblockkappe paßgenau zentrierbar ist und seine Schwingungen gedämpft sind. Der schwingungsgedämpfte Spalttopf trägt zur Reduzierung der Laufgeräusche bei.

In einer besonderen Ausführungsform wird die Kammerblockkappe am Motorgehäuse oder am Elektronik-Gehäusedeckel zentriert und ihrerseits im Inneren den Spalttopf insbesondere über ein Dämfungselement zentriert, wobei das Dämfungselement die Schwingungen dämpft.

Eine besondere Ausführungsform eines Motors, der nach dem erfindungsgemäßen Verfahren fertigbar ist, ist in den Zeichnungen 1 bis 3 dargestellt und wird im folgenden näher beschrieben. Es zeigen:
- **Figur 1**: einen Schnitt durch eine von einem Elektromotor betriebene Kreiselpumpe,
- **Figur 2**: einen Schnitt durch die Kammerblockkappe des Elektromotors mit einer Dreieckschaltung.
- **Figur 3**: einen Schnitt durch die Kammerblockkappe des Elektromotors mit einer Sternschaltung und

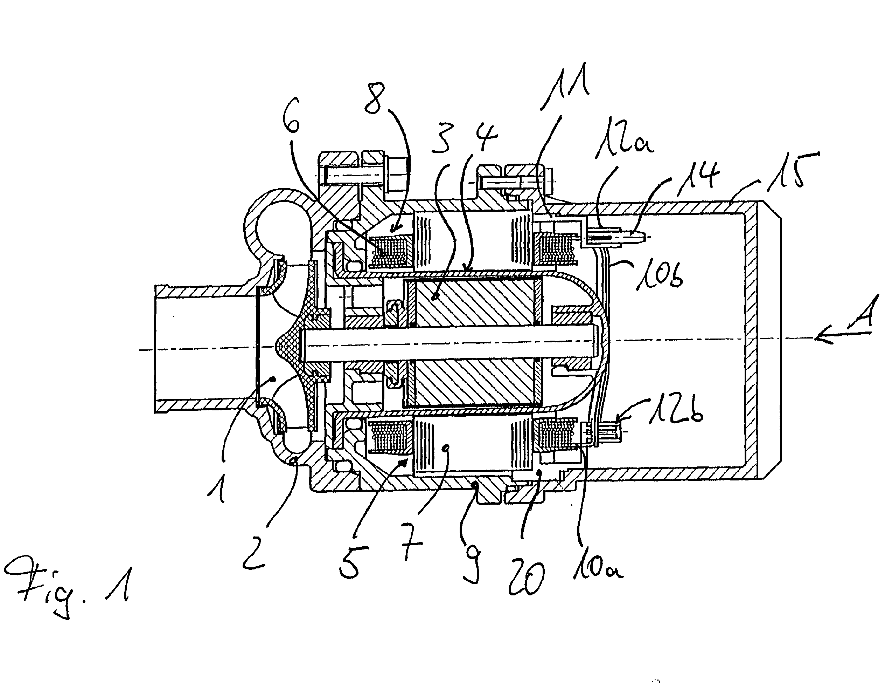

In Figur 1 ist ein Drehstrommotor zum Antrieb einer Kreiselpumpe mit zentralem Ansaugstutzen 21 gezeigt. Die Kreiselpumpe hat ein Laufrad 1, das in einem Pumpengehäuse 2 angeordnet ist. Der Rotor 3 des Motors ist durch einen Spalttopf 4 vom Stator 5 getrennt. Die von Statorwicklungen 6 umgebenen Polschenkel 7 liegen dicht am Spalttopf 4 an. In der Zeichnung ist zu erkennen, daß die Wicklungen bzw. Spulen 6 auf rahmenförmige Halterungen 8 aus Kunststoff lagenweise aufgewickelt sind. Der Stator 5 ist von einem Motorgehäuse 9 umgeben. Die Wicklungen können ebenso direkt auf abnehmbare Polschenkel aufgewickelt sein, die beim Zusammenbau in den Polring eingebracht werden.

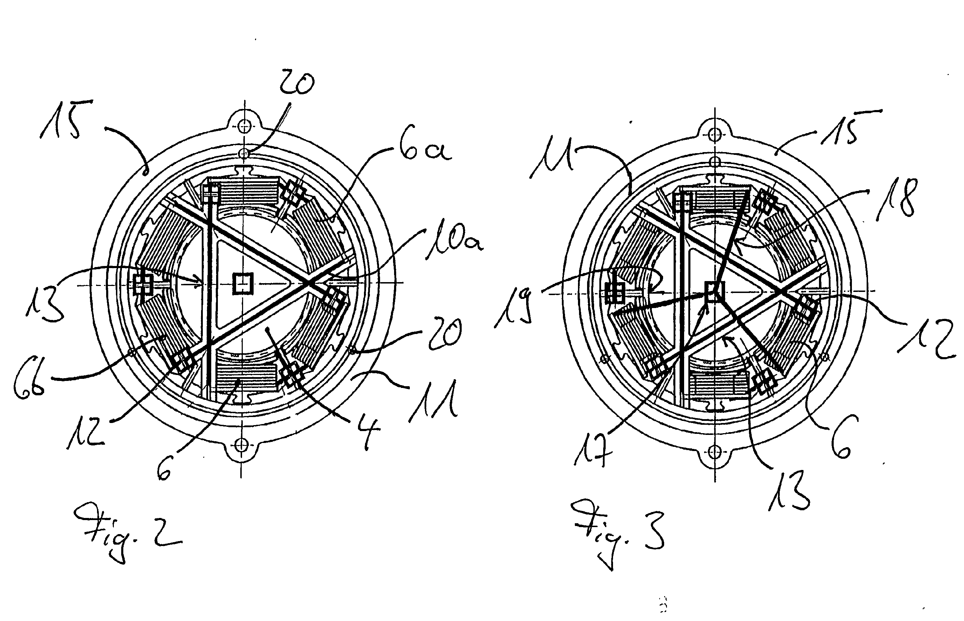

Die Enden 10a, 10b der in diesem Falle sechs Spulen 6 ragen zu der dem Laufrad 1 abgewandten Rückseite der Pumpe heraus und durchstoßen Ausnehmungen in einem die Wicklungen 6 abdeckenden Kontaktträger 11 aus Kunststoff, der in diesem Fall als Kammerblockkappe ausgebildet ist. Der Kontaktträger 11 ist bezogen auf die Einschubrichtung (Pfeil A) von hinten auf den Spalttopf 4 aufsetzbar, wobei der Spalttopf 4 eine zentrale Öffnung 19 (Figur 2) im Kontaktträger 11 durchragt. An der äußeren, dem Ansaugstutzen gegenüberliegenden Stirnseite des Kontaktträgers 11 sind die Enden 10a und 10b zweier gegenüberliegender Spulen 6a und 6b um etwa 90° parallel zur Stirmnfläche des Kontaltträgers 11 gebogen. Die Enden 10a und 10b verlaufen in Führungen 13, die sich auf der Kammerblockkappe befinden, und sind an einer Stelle nahe der einen Spule 6b zusammengefaßt. An der Stelle, wo beide Enden 10a und 10b zur gegenseitigen Anlage kommen sind sie durch einen aufgesteckten Schneid-Klemm-Kontakt 12 elektrisch und mechanisch miteinander verbunden.

Wie in Figur 2 ersichtlich, sind je zwei gegenüberliegende Spulen auf diese Weise durch Schneid-Klemm-Kontakt 12a zu einem Spulenpaar verbunden. Zudem sind je zwei benachbarte Spulen 6 über weitere drei Schneid-Klemmkontakte 12b untereinander verbunden, so daß sich eine Dreieckschaltung der sechs Spulen 6 ergibt. Die Schneid-Klemmkontakte 12b sind dabei so ausgebildet, daß sie einen Stecker 14 (Figur 1) zur Kontaktierung der nicht dargestellten Elektronik aufweisen. Die Elektronik ist durch ein Elektronikgehäuse 15 abgedeckt. Aus Figur 1 ist ersichtlich, daß sich alle Komponenten der Pumpe in axialer Richtung aufeinandersetzen lassen.

Im Gegensatz zu der in Figur 2 gezeigten Dreieckschaltung zeigt die Schaltung nach Figur 3 eine Sternschaltung. Bei dieser sind die enden 18 der drei Spulenpaare 6 an einem zentralen Sternpunkt 16 mit einem Schneid-Klemm-Kontakt 17 auf der Kammerblockkappe 11 zusammengeschaltet. Der Kontakt 17 kann dabei als aus drei einzelnen Blechen zusammengesetzer dreieckiger Zylinder aufgebaut sein.

In dieser Ausführungsform weist die Kammerblockkappe 11, Stifte 20 auf, die in Ausnehmungen des aufgesetzten Motorgehäuses 15 und in Nuten des Stators 3 eingreifen und die damit ein Verdrehen des Stators 3 gegenüber dem Gehäuse verhindern.

Das Verfahren zur Herstellung des Stators 3 mit aufgesetzter Kammerblockkappe 11 beinhaltet folgende Schritte. Zunächst werden die sechs Spulen 6 auf die Rahmen 8 derart gewickelt, daß alle Enden 10 an einer Stirnseite zu liegen kommen. Dann werden die einzelnen Wicklungen zusammengeführt und die in diesem Falle zwölf fingerartig abstehenden Drahtenden mit dem Aufnahmeorgan des Greifers, das die Form eines Kammes oder einer Gabel als Einfädelhilfe aufweist, erfaßt und mit dem Greifer entlang der Geometrie des Kontaktträgers zur Stelle der Kontaktierung geführt. Das Aufsetzen des Kontaktträgers kann vor oder nach dem Ergreifen erfolgen. Die Enden werden dann auf der Stirnseite mittels Schneid-Klemmkontakten (12) miteinander leitend verbunden. In einem Zwischenschritt werden die Enden auf die benötigte Länge geschnitten.

Zum Ergreifen der Enden (10a,10b) wird das Aufnahmeorgan des Greifers möglichst nahe an die Oberfläche der Wicklung herangeführt, wo die Enden noch eine definierte Position einnehmen. In einer besonderen Ausführungsform kann der Greifer unter Anlage an die Oberfläche der Wicklung geführt werden. Nach dem Ergreifen der Enden (10a,10b) wird das Aufnahmeorgan vorteilhafterweise verschlossen, so daß die Enden nicht aus dem Greifer herausrutschen können. Dazu werden die Lücken zwischen den Zähnen des Aufnahmeorganes verschlossen, so daß die Enden im Kamm in radialer Richtung gehalten sind.

## Patentansprüche

1. Verfahren zur Kontaktierung der Wicklungen (6) des Stators (5) eines Elektromotors, der insbesondere zum Antrieb einer Kreiselpumpe oder eines Lüfters eingesetzt wird, wobei der Stator (5) bei der Montage in axialer Richtung über den Rotor (3) schiebbar ist und wobei die Enden (10a, 10b) der Wicklungen (6) zu einem Kontaktträger (11) geführt werden, der auf der in Aufschubrichtung rückwärtigen Stirnseite der Wicklungen (6) angeordnet wird,
**dadurch gekennzeichnet,**
- **daß** die Wicklungen (6) derart gewickelt werden, daß die Drahtenden (10a,10b) die Wicklungen an der rückwärtigen Stirnseite verlassen,
- **daß** der Kontaktträger (11) auf die Stirnseite aufgesetzt wird,
- **daß** die Enden (10a,10b) mit einem Greifer gefaßt werden, der zur Aufnahme der Enden mit einem Aufnahmeorgan in Form eines Kammes oder einer Gabel als Einfädelhilfe ausgerüstet ist,
- **daß** mindestens zwei der Enden (10a,10b) mit dem Greifer auf der außenliegenden Stirnseite des Kontaktträgers (11) zusammengeführt werden und
- **daß** die Enden (10a,10b) auf der Stirnseite mittels eines Schneid-Klemmkontaktes (12) miteinander leitend verbunden werden.

2. Verfahren nach Anspruch 1,
**dadurch gekennzeichnet, daß** zum Ergreifen der Enden (10a,10b) das Aufnahmeorgan des Greifers nahe an die Oberfläche der Wicklung herangeführt wird.

3. Verfahren nach Anspruch 1 oder 2,
**dadurch gekennzeichnet, daß** zum Ergreifen der Enden (10a,10b) das Aufnahmeorgan des Greifers die Oberfläche der Wicklung berührt.

4. Verfahren nach einem der vorherigen Ansprüche,
**dadurch gekennzeichnet, daß** nach dem Ergreifen der Enden (10a,10b) die Lücken zwischen den Zähnen des Aufnahmeorganes verschlossen werden, so daß die Enden im Kamm in radialer Richtung gehalten sind.

5. Verfahren nach Anspruch 4,
**dadurch gekennzeichnet, daß** der Greifer mit dem umfaßten Drahtende an die äußere Stirnfläche des Kontaktträgers geführt wird.

6. Verfahren nach einem der vorherigen Ansprüche,
**dadurch gekennzeichnet, daß** die Enden (10a,10b) mit dem Greifer durch seitliche Ausnehmungen im Kontaktträger geführt werden.

7. Verfahren nach einem der vorherigen Ansprüche,
**dadurch gekennzeichnet, daß**
die Enden (10a,10b) der Wicklungen (6) vor dem Verbinden auf eine bestimmte Länge geschnitten werden.

8. Verfahren nach einem der vorherigen Ansprüche,
**dadurch gekennzeichnet, daß**
die Enden (10a,10b) übereinandergelegt werden und ein Schneid-Klemm-Kontakt (12) auf die übereinander oder nebeneinanderliegenden Enden (10a,10b) aufgesetzt wird.

9. Elektromotor zum Antrieb einer Kreiselpumpe wobei der Elektromotor statorwicklungen (6) aufweist, wobei die Statorwicklungen (6) kontaktiert sind, wobei die Enden (10a, 10b) der Wicklungen (6) zu einem Kontakträger (11) geführt sind, der auf der in Aufschubrichtung rückwärtigen stirnseite der Wicklungen (6) angeordnet ist,
**dadurch gekennzeichnet,**
- **daß** die Wicklungen (6) derart gewickelt sind, daß die Drahtenden (10a, 10b) die Wicklungen an der rückwärtigen Stirnseite verlassen,
- **daß** der Kontaktträger (11) auf die Stirnseite aufgesetzt ist,
- **daß** die Enden (10a, 10b) mit einem Greifer gefaßt sind, der zur Aufnahme der Enden mit einem Aufnahmeorgan in Form eines Kammes oder einer Gabel als Einfädelhilfe ausgerüstet ist,
- **daß** mindestens zwei der Enden (10a, 10b) mit dem Greifer auf der außenliegenden Stirnseite des Kontaktträgers (11) zusammengeführt sind,
- **daß** die Enden (10a, 10b) auf der Stirnseite mittels eines Schneid-Klemmkontaktes (12) miteinander leitend verbunden sind,
- **daß** der Elektromotor einen Spalttopf (4) aufweist
- **daß** der Stator (5) in axialer Richtung auf den Spalttopf (4) aufgeschoben ist.

10. Elektromotor nach Anspruch 9,
**dadurch gekennzeichnet, daß** auf dem Kontaktträger (11) jeweils zwei Wicklungen (6a,6b) mittels eines Schneid-Klemmkontaktes (12) zu einem Wicklungspaar verbunden sind.

11. Elektromotor nach Anspruch 9 oder 10,
**dadurch gekennzeichnet, daß** die Wicklungen (6) aus starrem Wicklungsdraht gewickelt sind, und daß die Enden (10a,10b) der Wicklungen (6) Ausnehmungen des Kontaktträgers (12) durchragen.

12. Elektromotor nach einem der vorherigen Ansprüche,
**dadurch gekennzeichnet, daß** die Enden der Wicklungen (10a,10b) auf der Außen liegenden Stirnseite des Kontaktträgers (12) verlegt und kontaktiert sind.

13. Elektromotor nach einem der Ansprüche 9 bis 12,
**dadurch gekennzeichnet, daß** die Enden der Wicklungen (10a,10b) in Führungsnuten (13) einliegen, die in die Stirnseite des Kontaktträgers (12) eingebracht sind.

14. Elektromotor nach einem der Ansprüche 9 bis 13,
**dadurch gekennzeichnet, daß** auf dem Kontaktträger (13) sechs Wicklungen (6) zum Antrieb eines Drehstrommotors verschaltet sind, wobei jeweils zwei Enden (10a,10b) zweier nebeneinanderliegender Wicklungen (6) über einen Schneid-Klemmkontakt (12b) miteinander leitend verbunden sind.

15. Elektromotor nach einem der Ansprüche 9 bis 14,
**dadurch gekennzeichnet, daß** die Wicklungen (6) einzeln auf rahmenförmige Halterungen (8) aus Kunststoff aufgewickelt sind und ein Magnetfeld in radialer Richtung erzeugen.

16. Elektromotor nach einem der Ansprüche 9 bis 15,
**dadurch gekennzeichnet, daß** jede Wicklung (6) einzeln aus starrem biegsamen Draht lagenweise auf einen dazugehörigen Polschenkel gewickelt ist.

17. Elektromotor nach einem der Ansprüche 9 bis 16,
**dadurch gekennzeichnet, daß** die Wicklungen (6) aus starrem biegsamen Draht lagenweise gewickelt sind.

18. Elektromotor nach einem der Ansprüche 9 bis 17,
**dadurch gekennzeichnet, daß** der Kontaktträger (11) aus Kunststoff ist und Mittel (20) aufweist, die in das Motorgehäuse (9) und/oder in das Elektronikgehäuse (15) eingreifen und so ein Verdrehen des Stators gegenüber dem Gehäuse verhindern und daß die Mittel (20) ein verdecktes Fügen der Elektronik zum Motor zulassen.

19. Elektromotor nach einem der Ansprüche 9 bis 18,
**dadurch gekennzeichnet, daß** die Kammerblockkappe (11) Stifte (20) aufweist, die in Ausnehmungen des aufgesetzten Motorgehäuses (15) und in Nuten des Stators (5) eingreifen und die damit ein Verdrehen des Stators (5) gegenüber dem Gehäuse verhindern.

20. Elektromotor nach einem der Ansprüche 9 bis 19,
**dadurch gekennzeichnet, daß** die Kammerblockkappe am Motorgehäuse oder am Elektronik-Gehäusedeckel zentriert wird und im Inneren den Spalttopf insbesondere über ein Dämfungselement zentriert, das die Schwingungen dämpft.

## Claims

1. Method for connecting the windings (6) of the stator (5) of an electric motor, which is used to drive a centrifugal pump or a fan in particular, in which the stator (5) may be shifted in an axial direction via the rotor (3) during assembly and in which the ends (10a, 10b) of the windings (6) are led to a contact carrier (11), which is located on the back face of the windings (6) in the sliding direction,
**characterised in that**,
- the windings (6) are wound in such a manner that the wire ends (10a 10b) leave the windings on the back face,
- the contact carrier (11) is fitted on the face,
- the ends (10a, 10b) are held by a gripper, which is equipped with a pick-up body in the form of a comb or a fork as a threading aid for picking up the ends,
- at least two of the ends (10a, 10b) are brought together with the gripper on the outer face of the contact carrier (11) and
- the ends (10a, 10b) on the face are conductively connected to each other by means of an insulation displacement contact (12).

2. Method according to claim 1,
**characterised in that** in order to grasp the ends (10a, 10b), the pick-up body of the gripper is led up to near the surface of the winding.

3. Method according to claim 1 or 2,
**characterised in that** in order to grasp the ends (10a, 10b), the pick-up body of the gripper touches the surface of the winding.

4. Method according to one of the foregoing claims,
**characterised in that** after the ends (10a, 10b) have been grasped, the gaps between the teeth of the pick-up body are closed, so that the ends are held in the comb in a radial direction.

5. Method according to claim 4,
**characterised in that** the gripper with the grasped wire ends is led to the outer face of the contact carrier.

6. Method according to one of the foregoing claims,
**characterised in that** the ends (10a, 10b) with the gripper are led through side openings in the contact carrier.

7. Method according to one of the foregoing claims,
**characterised in that** the ends (10a, 10b) of the windings (6) are cut to a specific length prior to connection.

8. Method according to one of the foregoing claims,
**characterised in that** the ends (10a, 10b) are laid one on top of the other and an insulation displacement contact (12) is fitted on the ends (10a, 10b) lying one on top of the other or next to each other.

9. Electric motor for driving a centrifugal pump, in which the electric motor has stator windings (6), in which the stator windings (6) are contacted, in which the ends (10a, 10b) of the windings (6) are led to a contact carrier (11), which is located on the back face of the windings (6) in the sliding direction,
**characterised in that**,
- the windings (6) are wound in such a manner that the wire ends (10a, 10b) leave the windings on the back face,
- the contact carrier (11) is fitted on the face,
- the ends (10a, 10b) are held by a gripper, which is equipped with an pick-up body in the form of a comb or a fork as a threading aid for picking up the ends,
- at least two of the ends (10a, 10b) are brought together with the gripper on the outer face of the contact carrier (11),
- the ends (10a, 10b) on the face are conductively connected to each other by means of an insulation displacement contact (12),
- the electric motor has a spacer (4),
- the stator (5) is slid on the spacer (4) in an axial direction.

10. Electric motor according to claim 9,
**characterised in that** on the contact carrier (11) two windings respectively (6a, 6b) are connected to a pair of windings by means of an insulation displacement contact (12).

11. Electric motor according to claim 9 or 10,
**characterised in that** the windings (6) are wound from rigid winding wire and that the ends (10a, 10b) of the windings (6) extend through openings in the contact carrier (12).

12. Electric motor according to one of the foregoing claims,
**characterised in that** the ends of the windings (10, 10b) are moved and contacted on the outer face of the contact carrier (12).

13. Electric motor according to one of claims 9 to 12,
**characterised in that** the ends of the windings (10, 10b) are inserted in guide grooves (13), which are made in the face of the contact carrier (12).

14. Electric motor according to one of claims 9 to 13,
**characterised in that** six windings (6) are connected up on the contact carrier (13) in order to drive a three phase motor, in which two ends respectively (10a, 10b) of two windings (6) located next to each other are conductively connected to each other via an insulation displacement contact (12).

15. Electric motor according to one of claims 9 to 14,
**characterised in that** the windings (6) are individually wound on frame-like holders (8) made of plastic and generate a magnetic field in a radial direction.

16. Electric motor according to one of claims 9 to 15,
**characterised in that** each winding (6) is individually wound from rigid, flexible wire in layers on a corresponding pole leg.

17. Electric motor according to one of claims 9 to 16,
**characterised in that** the windings (6) are wound from rigid, flexible wire in layers.

18. Electric motor according to one of claims 9 to 17,
**characterised in that** the contact carrier (11) is made of plastic and has means (20), which engage with the motor housing (9) and / or with the electronics housing (15) and thus prevent a twisting of the stator with respect to the housing and that the means (20) permit a concealed joining of the electronics with the motor.

19. Electric motor according to one of claims 9 to 18,
**characterised in that** the chamber block cap (11) has pins (20), which engage with the openings of the fitted motor housing (15) and with the grooves of the stator (5) and which thus prevent a twisting of the stator (5) with respect to the housing.

20. Electric motor according to one of claims 9 to 19,
**characterised in that** the chamber block cap is centred on the motor housing or on the electronics housing cover and within the interior it centres the spacer particularly via a damping element, which damps vibrations.

## Revendications

1. Procédé pour la mise en contact des bobinages (6) du stator (5) d'un moteur électrique, qui est utilisé en particulier pour l'entraînement d'une pompe centrifuge ou d'un ventilateur, le stator (5) pouvant être coulissant en direction axiale au-dessus du rotor (3) lors du montage et les extrémités (10a, 10b) des bobinages (6) étant guidées à un support de contacts (11) qui est disposé sur la face frontale, dirigée vers l'arrière en direction de coulissement, des bobinages (6),
**caractérisé par le fait**
- **que** les bobinages (6) ont été enroulés de telle manière que les extrémités (10a, 10b) des fils métalliques quittent les bobinages à la surface frontale dirigée vers l'arrière,
- **que** le support de contacts (11) est monté sur la face frontale,
- **que** les extrémités (10a, 10b) sont saisies par un preneur qui est équipé d'un organe de réception sous la forme d'un peigne ou d'une fourchette en tant qu'aide d'enfilage pour le logement des extrémités,
- **qu'**au moins deux des extrémités (10a, 10b) sont guidées ensemble par le preneur sur la face frontale du support de contacts (11) se trouvant à l'extérieur et
- **que** les extrémités (10a, 10b) sont reliées les unes aux autres sur la face frontale de manière conductrice au moyen d'un contact de coupe/serrage (12).

2. Procédé selon la revendication 1,
**caractérisé par le fait que**, pour la saisie des extrémités (10a, 10b), l'organe de réception du preneur est approché près de la surface du bobinage.

3. Procédé selon la revendication 1 ou 2,
**caractérisé par le fait que**, pour la saisie des extrémités (10a, 10b), l'organe de réception du preneur fait contact avec la surface du bobinage.

4. Procédé selon l'une des revendications précédentes,
**caractérisé par le fait que**, après la saisie des extrémités (10a, 10b), les vides entre les dents de l'organe de réception sont fermés de telle sorte que les extrémités sont maintenues en direction radiale dans le peigne.

5. Procédé selon la revendication 4,
**caractérisé par le fait que** le preneur est guidé avec les extrémités de fil métallique tenues embrassées sur la face frontale extérieure du support de contacts.

6. Procédé selon l'une des revendications précédentes,
**caractérisé par le fait que** les extrémités (10a, 10b) sont guidées par le preneur à travers des évidements latéraux dans le support de contacts.

7. Procédé selon l'une des revendications précédentes,
**caractérisé par le fait que** les extrémités (10a, 10b) des bobinages (6) sont coupées à une longueur déterminée avant la connexion.

8. Procédé selon l'une des revendications précédentes,
**caractérisé par le fait que** les extrémités (10a, 10b) sont posées les unes au-dessus des autres et qu'un contact de coupe/serrage (12) est monté sur les extrémités (10a, 10b) disposées les, unes au-dessus des autres ou côte à côte.

9. Moteur électrique pour l'entraînement d'une pompe centrifuge, le moteur électrique présentant des bobinages de stator (6), les bobinages de stator (6) étant mis en contact, les extrémités (10a, 10b) des bobinages (6) étant guidées à un support de contacts (11) qui est disposé sur la face frontale, dirigée vers l'arrière en direction de coulissement, des bobinages (6),
**caractérisé par le fait**
- **que** les bobinages (6) sont enroulés de telle manière que les extrémités des fils métalliques (10a, 10b) quittent les bobinages à la face frontale dirigée vers l'arrière,
- **que** le support de contacts (11) est monté sur la face frontale,
- **que** les extrémités (10a, 10b) sont saisies par un preneur qui est équipé d'un organe de réception sous la forme d'un peigne ou d'une fourchette en tant qu'aide d'enfilage pour le logement des extrémités,
- **qu'**au moins deux des extrémités (10a, 10b) sont guidées ensemble par le preneur sur la face frontale du support de contacts (11) se trouvant à l'extérieur,
- **que** les extrémités (10a, 10b) sont reliées les unes aux autres de manière conductrice sur la face frontale au moyen d'un contact de coupe/serrage (12),
- **que** le moteur électrique présente un pot d'entrefer (4),
- **que** le stator (5) est enfilé en direction axiale sur le pot d'entrefer (4).

10. Moteur électrique selon la revendication 9,
**caractérisé par le fait que** respectivement deux bobinages (6a, 6b) sont reliés en une paire de bobinages sur le support de contacts (11) au moyen d'un contact de coupe/serrage (12).

11. Moteur selon la revendication 9 ou 10,
**caractérisé par le fait que** les bobinages (6) sont bobinés en un fil métallique rigide et que les extrémités (10a, 10b) des bobinages (6) traversent des évidements du support de contacts (11).

12. Moteur électrique selon l'une des revendications précédentes,
**caractérisé par le fait que** les extrémités des bobinages (10a, 10b) sont déplacées sur la face frontale du support de contacts (11) se trouvant à l'extérieur et mises en contact. ,

13. Moteur électrique selon l'une des revendications 9 à 12,
**caractérisé par le fait que** les extrémités des bobinages (10a, 10b) sont logées dans des rainures de guidage (13) qui sont ménagées dans la face frontale du support de contacts (11).

14. Moteur électrique selon l'une des revendications 9 à 13,
**caractérisé par le fait que** six bobinages (6) sont câblés sur le support de contacts (11) pour l'entraînement d'un moteur à courant alternatif triphasé, respectivement deux extrémités (10a, 10b) de deux bobinages (6) se trouvant l'un à côté de l'autre étant reliés de manière conductrice l'un avec l'autre par l'intermédiaire d'un contact de coupe/serrage (12b).

15. Moteur électrique selon l'une des revendications 9 à 14,
**caractérisé par le fait que** les bobinages (6) sont enroulés individuellement sur des fixations (8) en matière synthétique et engendrent un champ magnétique en direction radiale.

16. Moteur électrique selon l'une des revendications 9 à 15,
**caractérisé par le fait que** chaque bobinage (6) est enroulé individuellement en fil métallique rigide flexible par couches sur une partie saillante de pôle qui en fait partie.

17. Moteur électrique selon l'une des revendications 9 à 16,
**caractérisé par le fait que** les bobinages (6) sont enroulés par couches en fil métallique rigide souple.

18. Moteur électrique selon l'une des revendications 9 à 17,
**caractérisé par le fait que** le support de contacts (11) est en matière synthétique et présente des moyens (20) qui viennent en prise dans le carter de moteur (9) et/ou dans le carter d'électronique (15) et empêchent de cette manière une torsion du stator par rapport au carter et que les moyens (20) permettent un assemblage masqué de l'électronique au moteur.

19. Moteur électrique selon l'une des revendications 9 à 18,
**caractérisé par le fait que** la coiffe de bloc de chambre (11) présente des broches (20) qui viennent en prise dans des évidements du carter de moteur (15) monté et dans des rainures du stator (5) et qui empêchent de ce fait une torsion du stator (5) par rapport au carter.

20. Moteur électrique selon l'une des revendications 9 à 19,
**caractérisé par le fait que** la coiffe de bloc de chambre est centrée sur le carter de moteur ou sur le couvercle du carter d'électronique et centrée dans l'intérieur du pot d'entrefer, en particulier par l'intermédiaire d'un élément d'amortissement qui amortit les oscillations.
